# EUROPEAN PATENT SPECIFICATION

(11) **EP 2 383 145 B1**
(45) Date of publication and mention of the grant of the patent: **16.01.2013**
(21) Application number: 10195752.0
(22) Date of filing: 17.12.2010
(51) Int. Cl.: B60P 7/08

(54) **Tensioning system and cargo space and vehicle provided with such a tensioning system**
Spannsystem und Frachtraum sowie mit diesem Spannsystem ausgestattetes Fahrzeug
Système de tensionnement et espace de chargement, et véhicule fourni avec un tel système de tensionnement

(30) Priority: 18.12.2009 BE 200900803
(43) Date of publication of application: 02.11.2011
(73) Proprietor: Bosmans, Rutger Lucien Maria, 3960 Zutendaal (BE)
(72) Inventor: Bosmans, Rutger Lucien Maria, 3960 Zutendaal (BE)
(74) Representative: van Westenbrugge, Andries

(56) References cited:
- AU-B2- 2002 300 918
- DE-U1- 20 113 047
- GB-A- 2 472 780

## Description

The invention relates to a tensioning system for securing cargo in a cargo space, according to the preamble of claim 1.

A tensioning system of this type is known from DE-U-20113047. By means thereof, the cargo situated in the cargo space can be tightly lashed down, so that the cargo is reliably secured against displacement on account of shocks, transverse and longitudinal forces and the like which occur during transportation. In particular with cargo spaces where the walls consist of a frame of uprights and longitudinal beams, covered by tarpaulin and the like, this protection is very important. This is due to the fact that the strength of such walls is limited, as a result of which loose cargo cannot readily be secured in the cargo space. However, problems can occur even in a cargo space having metal or wooden walls if the cargo starts to slide. In general, sliding cargo carries a risk when braking and driving through bends.

Several tensioning systems are provided along the length of the cargo space, one behind the other, since it has to be possible to secure each piece of cargo against displacement. Since most cargo is stacked on pallets, tensioning systems will usually have to have a centre-to-centre distance which approximately corresponds to the length of a pallet. The drawback of the known tensioning system is that the rest position of the tensioning member is not well defined. The rest position has to be fixed by the pull device. However, because the latter consists of an elastic cord which is guided on pulleys, it does not seem possible to retract the tensioning member properly. These pulleys are suspended from the side wall of the cargo space. They project from the side wall inwards into the cargo space. The result thereof is that the tensioning strap, starting from the bottom and going to the top of the cargo space, will protrude further and further inwards. In addition, the pulleys also project downwards into the cargo space with respect to the top of the cargo space, as a result of which the tensioning strap, in the completely retracted position, hangs relatively far below the top. The consequence thereof is that a large piece of cargo will touch the tensioning strap when it is moved into the cargo space, which adversely affects loading and unloading of the cargo space. Moreover, there is the problem that the elastic cord of the pull device will stretch slightly in use, as a result of which the abovementioned problems are aggravated further. Due to these circumstances, the tensioning member will be in a position which still hampers loading and/or unloading of the cargo space.

US 2006/0153657 proposes a device by means of which a tensioning strap can be fitted over relatively tall cargo. In this case, a launching device is used, by means of which the rolled-up tensioning strap can be thrown over the cargo. Such a launching device can only be used satisfactorily with an open cargo space. However, in a closed cargo space, the tensioning strap cannot be employed in such a way as there is hardly sufficient space, particularly if the cargo is tall, to carry out the launching movement.

US 2005/2086986 and US 5800106 disclose straps by means of which cargo can be grasped on the side and can be pressed against the front or rear end of the cargo space. Such a system is not suitable for individually securing several large pieces of cargo.

US 2009/0208305 discloses a winding system for a tensioning strap. By means of a magnet, said winding system can be suspended from arbitrary positions in a cargo space and be kept ready for use. The drawback of this known system is the fact that many operations are required in order to attach the tensioning strap on either side of the cargo, since the tensioning strap firstly has to be completely unwound and can only then be fixed.

It is therefore an object of the invention to provide a tensioning system which can easily be kept ready for use in the cargo space of, for example, a lorry, of a container or of a goods carriage and the like and which can also easily be tensioned in order to secure cargo. At the same time, it has to be possible to maintain correct operation of the tensioning system for a long period of time. This object is achieved by the characterizing features of claim 1.

The pull device ensures that the tensioning member, for example a tensioning strap or tensioning belt can be kept in a certain desired position or rest position which is determined by the stop means. In this rest position, the tensioning member is ready to be applied to a piece of cargo and be tensioned. As a result thereof, the tensioning member can also be tensioned around pieces of cargo without problems in the case of tall cargo, when little space remains below the roof of the cargo space. Conversely, the tensioning member can be removed from the cargo in an orderly fashion before the latter is unloaded, after which the cargo can be removed from the cargo space without the tensioning member becoming an obstruction.

As the pull device is prestressed, the tensioning member is immediately returned to the rest position as soon as it is released by the tensioning means. This requires no separate operation, which increases the ease of use. The process of loading and unloading cargo is also speeded up due to the fact that fitting, tensioning, releasing and returning the tensioning member takes little time.

In order to define the rest position of the tensioning member well, retaining means are provided in addition to the stop means. When the pull device has been moved back sufficiently, the retaining means become operative, as a result of which the prestress of the pull device no longer has to keep it in the retracted position, or is no longer the sole means to do this. These retaining means may be embodied in different ways. According to a first possibility, the action of the retaining means is based on magnetism. In this case, the parts of the retaining means which magnetically attract one another can touch one another physically. However, it is also possible for the retaining means to be magnetically attracted to one another without physically touching one another. Variants other than magnetic ones are however also possible, such as action based on the interaction of textile hooks and loops (Velcro®). Clamping action, for example by means of conical surfaces which cooperate with one another, is also suitable.

The retaining means are configured to hold the stop means against the stop means. In this case, it can be said that the retaining means amplify the stop action of the stop means.

Such stop means may be embodied in many different ways; they comprise a fixed stop element in the cargo space and a movable stop element on the tensioning member and/or on the pull device. In the case of magnets, it is for example possible for a metal part to come to a stop against the magnets.

The pull device may comprise a flexible or articulated elongate pull member. The pull member can be prestressed in various ways, for example by means of a mass which is prestressed under the effect of gravity or, for example, lead or iron. However, preference is given to a pull member which is relatively elastic with regard to tensile load. In order to allow the displacement of the tensioning member connected to the pull member to proceed satisfactorily, the connection between the pull member and the tensioning member may allow mutual displacement thereof, for example as can be achieved using a hook-like or loop-like connection.

According to a preferred embodiment, two pull devices are provided which are fitted opposite one another on or near the top of the cargo space. The tensioning member can then be kept ready high in the cargo space and along the side walls, in such a manner that any piece of cargo, also those having a maximum height, can easily be pushed into the cargo space. By then tensioning the tensioning member by means of the tensioning means, the cargo can be secured in a reliable and simple way.

In a practical embodiment which can be readily fitted in the cargo space, each pull device comprises a housing for mounting in the cargo space, to which housing in each case one end of an associated flexible pull member is attached and via which housing the free end of the flexible pull member of the other pull device is run downwards. This other pull device may be situated on the opposite side wall of the cargo space, in which case the pull member runs transversely through the upper part of the cargo space. However, a variant in which this other pull device is situated on the same side wall is also possible; in this case the pull member runs in the longitudinal direction of the cargo space. In these cases, the stop means may be provided on the housing, in such a manner that the downwardly extending end of the flexible pull member which is attached to the one housing can in each case be brought into cooperation with the stop means on the other housing.

The invention furthermore relates to a cargo space of a vehicle or container and the like, as well as to a tensioning system as described above for securing cargo in the cargo space of the vehicle, comprising a tensioning device with a bendable or articulated elongate tensioning member which is relatively stiff in the tensioning direction, such as a tensioning strap, tensioning means which cooperate with the elongate member and are mounted in the cargo space on either side of the cargo in order to bring the tensioning member into a tensioned state with regard to the cargo held in the cargo space, as well as at least one prestressed pull device, which pull device cooperates with the tensioning member in order to, when the tensioning means are released, bring the tensioning member from the tensioned state into a rest position and in order to allow the tensioning member to be brought from the rest position to the tensioned state counter to the prestress of the pull device.

According to the invention, the cargo space is characterized by retaining means which are configured to hold the stop means in the rest position, in addition to, or instead of, the prestress of the pull device. Incidentally, the cargo space may be configured to have stop means which determine the rest position of the tensioning member, in which case the retaining means are configured to hold the stop means against the stop means.

In a known manner, the cargo space may have upright longitudinal sides which comprise a frame composed of uprights and longitudinal beams connecting the uprights to one another, wherein each pull device is suspended from one of the longitudinal beams, preferably an upper longitudinal beam. Each frame may be covered on the outside with a flexible sheet-type member, such as a tarpaulin. Both ends of the tensioning means may be situated on or near the floor of the cargo space. It is furthermore known that the tensioning means may comprise a tensioning mechanism, such as a pawl. The pull devices are preferably situated on opposite sides in the top.

The invention also relates to a road vehicle or rail vehicle provided with the cargo space as described above. In addition, the invention relates to a container having such a cargo space. The container can be placed on the chassis of a road vehicle or of a rail vehicle for transportation. Preferably, the tensioning system, in particular the pull device, is displaceable in the cargo space in the longitudinal direction. This ensures that when the tensioning system is retracted, the cargo space remains accessible from above in connection with loading and unloading by means of a crane.

The invention will now be explained in more detail with reference to an exemplary embodiment illustrated in the figures, in which:
Fig. 1 shows a cross section of a cargo space with the tensioning system according to the invention in a rest position.
Fig. 2 shows a cross section of the cargo space with the tensioning system in a tensioned state.
Fig. 3 shows the detail of III from Fig. 1 on an enlarged scale.
Fig. 4 shows the view of IV from Fig. 3.

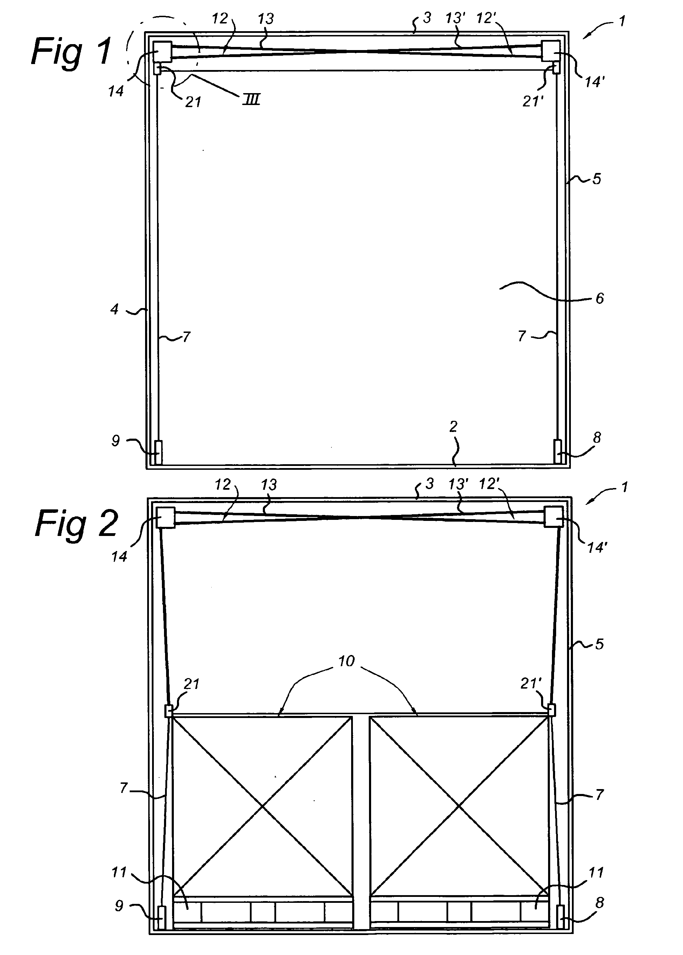

The cargo space 1 illustrated in Fig. 1 consists, in a known manner, of the bottom 2, a cover 3 and longitudinal walls 4, 5. The cargo space 1 is, in the usual way, closed off at the front by a partition 6, and at the back by doors (not shown). Such a cargo space 1 may form part of the superstructure of a lorry or of a goods carriage. It is also possible for the cargo space 1 to form part of a container which can be placed on such a vehicle in order to be transported.

In the interior space of the cargo space 1, there is a tensioning strap 7 which is attached on one side by means of a fixed mounting point 8 and at the other end by a tensioning means 9, such as a pawl. In the position illustrated in Fig. 1, the tensioning strap 7 is at rest, in which case it extends closely along the longitudinal walls 4, 5 and the cover 3 in such a manner that the inside of the cargo space 1 is readily accessible, even for the tallest type of cargo. After a cargo 10 has been placed in the cargo space which, in the illustrated exemplary embodiment is held on a pallet 11, the tensioning strap 7 can be tensioned tightly across the cargo 10 by driving the tensioning means 9, as is illustrated in the tensioned state of Fig. 2.

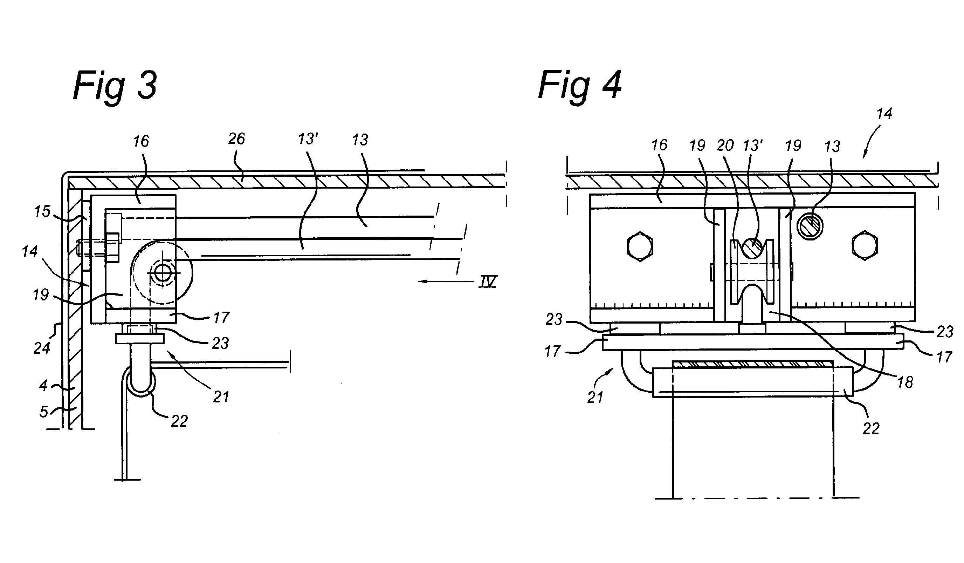

The invention now relates to the pull devices which are denoted overall by reference numeral 12 and by means of which the tensioning strap 7 can be held in the rest position illustrated in Fig. 1. In the illustrated exemplary embodiment, these pull devices 12 each have an elastic cord 13 and a housing 14. The elastic cord 13 is fixed at one end. In the view from Fig. 3, it can be seen that the elastic cord 13 is, in particular, fixed to the housing 14, which is in turn fixed to a longitudinal beam 15 of the longitudinal wall 4. The longitudinal beam 15 forms part of the frame which furthermore comprises uprights 25 and cross beams 26. On this frame, for example, a tarpaulin 24 is disposed, thus forming the longitudinal walls 4, 5 and the cover 3. The housing 14 contains an upper flange 16 and two bottom flanges 17 between which there is an opening 18. Between the upper flange 16 and the bottom flanges 17, in each case a vertical flange 19 extends on either side of the opening 18.

Between these vertical flanges 19, the diabolo-shaped roller 20 is rotatably suspended, over which roller 20 the elastic cord 13' is deflected in the direction of the bottom 2. The one end of this elastic cord 13' is fixed to the housing 14' which is situated on the other longitudinal wall 5. The other end of the elastic cord 13' is connected to the bracket 21, which is provided with a cylindrical roller 22. The tensioning strap 7 runs over this cylindrical roller 22. Obviously, a corresponding bracket 21' is provided on the other side of the cargo space and is attached to the elastic cord 13', as is also illustrated in Figs. 1 and 2, as a result of which the tensioning strap 7 follows the desired course.

Magnets 23 are provided in the bottom flanges 17. As soon as the bracket 21 comes near to these magnets 23, the bracket is pulled strongly and held against the bottom flanges 17, as a result of which the tensile forces on the respective elastic cord 13' are relieved. The bottom flanges 17 and the bracket 21 in this case act as stop means which define the outermost position of the pull devices.

The tensioning system as described above works as follows. In the rest position illustrated in Fig. 1, the cargo 10, 11 is placed in the cargo space 1, for example by means of a forklift truck. When the cargo 10, 11 has been positioned correctly, the tensioning means 9 is operated, as a result of which the tensioning strap 7 is pulled downwards from the rest position. During this operation, the brackets 21 are first pulled off the respective magnets 23, after which the elastic cords 13, 13' furthermore start to stretch. This stretching continues until the position illustrated in Fig. 2 is reached, and the tensioning strap 7 is pulled tightly across the cargo 10, 11. Depending on the height of the cargo 10, 11, the elastic cords 13, 13' have to be stretched to a greater or lesser degree.

When the cargo 10, 11 has to be unloaded, the reverse takes place, i.e. the tensioning means 9 is operated again in order to release the tensioning strap 7. As soon as the tensioning strap 7 has been given sufficient space, it is lifted up by the effect of the prestressing force exerted thereon by the elastic cords 13, 13'. Finally, the brackets 21,21' come near the above-described magnets 23, in such a manner that they are pulled against the respective housing 14, 14'. The cargo can now be unloaded since the tensioning strap 7 is in such a high position under the cover 3 and close to the inner side of the longitudinal walls 4, 5 that unloading can be effected without problems. Conversely, it is also possible to load new cargo into the cargo space 1 without problems.

Although the elastic cords 13, 13' run in the transverse direction in the illustrated exemplary embodiment, a variant (not shown) is also possible in which the cords 13, 13' run in the longitudinal direction and are attached to a housing on the same side wall of the cargo space. The orientation of the diabolo-shaped roller 20 then has to be adapted accordingly, in such a manner that the centre axis thereof is at a right angle to the side wall.

## Claims

1. Tensioning system for securing cargo (10) in a cargo space (1), such as of a vehicle, container and the like, comprising a bendable or articulated elongate tensioning member (7) which is relatively stiff in the tensioning direction, such as a tensioning strap, tensioning means (8, 9) which cooperate with the elongate member and serve for attachment in the cargo space in order to bring the tensioning member in a tensioned state with respect to the cargo loaded in the cargo space, at least one prestressed pull device (12, 12') for attachment in the cargo space (1), which pull device cooperates with the tensioning member (7) in order to bring the tensioning member (7) from the tensioned state into a rest position upon release of the tensioning means (8, 9) and in order to allow the tensioning member (7) to be brought from the rest position into the tensioned state counter to the prestress of the pull device (12, 12'), as well as stop means (17, 21) which determine the rest position of the tensioning member (7); **characterized by** retaining means (23) which are provided in order to amplify the stop state of the stop means (17, 21), for example in order to hold the stop means (17, 21) against one another.

2. Tensioning system according to Claim 1, wherein retaining means (23) are provided which hold the tensioning member (7) in the rest position in addition to and/or instead of the prestress in the pull device (12, 12').

3. Tensioning system according to one of the preceding claims, wherein the action of the retaining means (23) is based on magnetism, and/or on the interaction of textile hooks and loops, and/or on elastic deformation, and/or clamping.

4. Tensioning system according to one of the preceding claims, wherein the pull device comprises a bendable or articulated elongate pull member (13, 13') which is relatively elastic with regard to tensile forces.

5. Tensioning system according to one of the preceding claims, wherein two pull devices (12, 12') are provided which both cooperate with one and the same tensioning member (7) and which are meant to be fitted opposite one another on or near the top (3) of the cargo space (1), wherein each pull device (12, 12') comprises a housing (14, 14') for mounting in the cargo space (1), to which housing in each case an associated flexible pull member (13', 13) is attached and via which housing the flexible pull member (13, 13') of the other pull device is run, in such a manner that each flexible pull member (13, 13') has at least one part (25, 26) which extends between both housings (14, 14') and a part (27) which runs downwards from a housing.

6. Tensioning system according to Claim 5, wherein a flexible pull member (13, 13') is attached to the one housing and runs downwards via the other housing.

7. Tensioning system according to Claim 5, wherein a flexible pull member is attached to a first housing, is guided with respect to the other housing and is run downwards via the first housing.

8. Tensioning system according to one of Claims 5-7, wherein the stop means (17) and the retaining means (23) are provided on each housing (14, 14'), in such a manner that the downwardly extending end of each flexible pull member can be brought into cooperation with the stop means of a housing.

9. Cargo space (1) of a vehicle or container and the like, as well as a tensioning system according to one of the preceding claims for securing cargo in said cargo space, comprising a bendable or articulated elongate tensioning member (7) which is relatively stiff in the tensioning direction, such as a tensioning strap, tensioning means (8, 9) which cooperate with the elongate tensioning member and are mounted in the cargo space on either side of the cargo (10, 11) in order to bring the tensioning member (7) into a tensioned state with regard to the cargo held in the cargo space, as well as at least one prestressed pull device (12, 12') held in the cargo space (1), which pull device cooperates with the tensioning member (7) in order to, when the tensioning means are released, bring the tensioning member from the tensioned state into a rest position and in order to allow the tensioning member to be brought from the rest position to the tensioned state counter to the prestress in the pull device, **characterized by** retaining means which are configured to hold the stop means in the rest position, in addition to, the prestress of the pull device.

10. Cargo space (1) according to Claim 9 comprising upright longitudinal sides (4, 5) which comprise a frame composed of uprights and longitudinal beams (15) connecting the uprights to one another, as well as two tensioning systems, wherein a pull device (12, 12') of one of the tensioning systems is suspended from one of the longitudinal beams (15) and a pull device (12, 12') of the other tensioning system is suspended from another one of the longitudinal beams (15).

11. Cargo space (1) according to Claim 10, wherein each of the tensioning means (8, 9) has two ends, which ends are or can be attached on or near the floor of the cargo space.

12. Cargo space (1) according to Claim 10 or 11, wherein the pull devices (12, 12') are situated on opposite sides in the top (3) of the cargo space.

13. Cargo space according to one of Claims 10-12, wherein the pull devices (12, 12') are displaceable in the longitudinal direction of the cargo space and can be fixed at predetermined positions.

14. space according to one of Claims 9-13, wherein the tensioning means include a tensioning mechanism, such as a pawl.

## Patentansprüche

1. Spannsystem zum Sichern von Ladung (10) in einem Laderaum (1), wie etwa eines Fahrzeuges, eines Containers und dergleichen, umfassend ein biegbares oder gegliedertes, längliches Spannelement (7), das in der Spannrichtung relativ steif ist, wie etwa ein Spanngurt, Spanneinrichtungen (8, 9), die mit dem länglichen Element zusammenwirken und zur Befestigung in dem Laderaum dienen, um das Spannelement in einen gespannten Zustand in Bezug auf die Last zu bringen, die in den Laderaum geladen ist, wenigstens eine vorgespannte Zugvorrichtung (12, 12') für die Befestigung in dem Laderaum (1), wobei die Zugvorrichtung mit dem Spannelement (7) zusammenwirkt, um das Spannelement (7) aus dem gespannten Zustand in eine Ruhestellung bei Lösen der Spanneinrichtungen (8, 9) zu bringen und es zu gestatten, dass das Spannelement (7) aus der Ruhestellung in den gespannten Zustand gegen die Vorspannung der Zugvorrichtung (12, 12') gebracht wird, wie auch Anschlagseinrichtungen (17, 21), die die Ruhestellung des Spannelementes (7) bestimmen, **gekennzeichnet durch** Halteeinrichtungen (23), die vorgesehen sind, um den Anschlagszustand der Anschlagseinrichtungen (17, 21) zu verstärken, um beispielsweise die Anschlagseinrichtungen (17, 21) gegeneinander zu halten.

2. Spannsystem nach Anspruch 1, bei der Halteeinrichtungen (23) vorgesehen sind, die das Spannelement (7) in der Ruhestellung zusätzlich zu und/oder anstelle der Vorspannung in der Zugvorrichtung (12, 12') halten.

3. Spannsystem nach einem der vorhergehenden Ansprüche, bei dem die Wirkung der Halteeinrichtungen (23) auf Magnetismus und/oder Zusammenwirken textiler Haken und Schlaufen und/oder elastischer Verformung und/oder Klemmen basiert.

4. Spannsystem nach einem der vorhergehenden Ansprüche, bei dem die Zugvorrichtung ein biegbares oder gegliedertes, längliches Zugelement (13, 13') umfasst, das in Bezug auf die Zugkräfte relativ elastisch ist.

5. Spannsystem nach einem der vorhergehenden Ansprüche, bei dem zwei Zugvorrichtungen (12, 12') vorgesehen sind, die beide mit ein und demselben Spannelement (7) zusammenwirken und einander gegenüberliegend auf oder in der Nähe der Oberseite (3) des Laderaumes (1) angebracht sein sollen, wobei jede Zugvorrichtung (12, 12') ein Gehäuse (14, 14') für die Anbringung in dem Laderaum (1) umfasst, wobei an diesem Gehäuse in jedem Fall ein zugehöriges flexibles Zugelement (13', 13) angebracht ist und über dieses Gehäuse das flexible Zugelement (13, 13') der anderen Zugvorrichtung derart läuft, dass jedes flexible Zugelement (13, 13') wenigstens einen Tell (25, 26), der sich zwischen beiden Gehäusen (14, 14') erstreckt, und einen Teil (27) hat, der von einem Gehäuse nach unten verläuft.

6. Spannsystem nach Anspruch 5, bei dem ein flexibles Zugelement (13, 13') an dem einen Gehäuse angebracht ist und über das andere Gehäuse nach unten verläuft.

7. Spannsystem nach Anspruch 5, bei dem ein flexibles Zugelement an einem ersten Gehäuse angebracht ist, in Bezug auf das andere Gehäuse geführt ist und über das erste Gehäuse nach unten verläuft.

8. Spannsystem nach einem der Ansprüche 5 bis 7, bei dem die Anschlagseinrichtungen (17) und die Halteeinrichtungen (23) an jedem Gehäuse (14, 14') derart vorgesehen sind, dass das sich nach unten erstreckende Ende jedes flexiblen Zugelementes mit den Anschlagseinrichtungen eines Gehäuses in Zusammenwirkung gebracht werden kann.

9. Laderaum (1) eines Fahrzeuges oder Containers oder dergleichen wie auch ein Spannsystem nach einem der vorhergehenden Ansprüche zum Sichern von Ladung in dem Laderaum, umfassend ein biegbares oder gegliedertes, längliches Spannelement (7), das in der Spannrichtung relativ steif ist, wie etwa ein Spanngurt, Spanneinrichtungen (8, 9), die mit dem länglichen Spannelement zusammenwirken und in dem Laderaum auf beiden Seiten der Ladung (10, 11) angebracht sind, um das Spannelement (7) in einen gespannten Zustand in Bezug auf die Ladung zu bringen, die in dem Laderaum gehalten ist, wie auch wenigstens eine vorgespannte Zugvorrichtung (12, 12'), die in dem Laderaum (1) gehalten ist, wobei die Zugvorrichtung mit dem Spannelement (7) zusammenwirkt, um, wenn die Spanneinrichtungen gelöst sind, das Spannelement aus dem gespannten Zustand in eine Ruhestellung zu bringen und es zu gestatten, dass das Spannelement aus der Ruhestellung in den gespannten Zustand gegen die Vorspannung der Zugvorrichtung gebracht wird, **gekennzeichnet durch** Halteeinrichtungen, die dazu eingerichtet sind, die Anschlagseinrichtungen in der Ruhestellung zusätzlich zu der Vorspannung der Zugvorrichtung zu halten.

10. Laderaum (1) nach Anspruch 9, umfassend aufrechte Längsseiten (4, 5), die einen Rahmen umfassen, der aus Stützen und Längsträgern (15), die die Stützen miteinander verbinden, besteht, wie auch zwei Spannsysteme, wobei eine Zugvorrichtung (12, 12') eines der Spannsysteme an einem der Längsträger (15) aufgehängt ist und eine Spannvorrichtung (12, 12') des anderen Spannsystems an dem anderen der Längsträger (15) aufgehängt ist.

11. Laderaum (1) nach Anspruch 10, bei dem jede der Spanneinrichtungen (8, 9) zwei Enden hat, wobei die Enden an dem oder in der Nähe des Bodens des Laderaums angebracht sind oder angebracht werden können.

12. Laderaum (1) nach Anspruch 10 oder 11, bei dem die Zugvorrichtungen (12, 12') auf gegenüberliegenden Seiten auf der Oberseite (3) des Laderaums angebracht sind.

13. Laderaum nach Anspruch 10 bis 12, bei dem die Zugvorrichtungen (12, 12') in der Längsrichtung des Laderaums verschiebbar sind und an vorbestimmten Positionen befestigt werden können.

14. Laderaum nach einem der Ansprüche 9 bis 13, bei dem die Spanneinrichtungen einen Spannmechanismus, wie etwa eine Sperrklinke umfassen.

## Revendications

1. Système tendeur permettant d'arrimer une cargaison (10) dans un espace de cargaison (1), tel qu'un véhicule, un conteneur ou similaire, comprenant un organe tendeur allongé courbable ou articulé (7) qui est relativement raide dans la direction de mise en tension, tel qu'une sangle tendeuse, des moyens tendeurs (8, 9) qui coopèrent avec l'organe allongé et servent à la fixation dans l'espace de cargaison afin d'amener l'organe tendeur dans un état tendu par rapport à la cargaison chargée dans l'espace de cargaison, au moins un dispositif de traction précontraint (12, 12') pour fixation dans l'espace de cargaison (1), lequel dispositif de traction coopère avec l'organe tendeur (7) afin d'amener l'organe tendeur (7) de l'état tendu à une position de repos lors de la libération des moyens tendeurs (8, 9) et afin de permettre à l'organe tendeur (7) d'être amené de la position de repos à l'état tendu à l'encontre de la précontrainte du dispositif de traction (12, 12'), ainsi que des moyens d'arrêt (17, 21) qui déterminent la position de repos de l'organe tendeur (7), **caractérisé par** des moyens de retenue (23) qui sont fournis afin d'amplifier l'état d'arrêt des moyens d'arrêt (17, 21), par exemple afin de maintenir les moyens d'arrêt (17, 21) l'un contre l'autre.

2. Système tendeur selon la revendication 1, dans lequel les moyens de retenue (23) sont fournis qui maintiennent l'organe tendeur (7) dans la position de repos en plus et/ou à la place de la précontrainte du dispositif de traction (12, 12').

3. Système tendeur selon l'une quelconque des revendications précédentes, dans lequel l'action des moyens de retenue (23) est basée sur le magnétisme, et/ou sur l'interaction de fermetures boucles et crochets textiles, et/ou sur une déformation élastique et/ou un serrage.

4. Système tendeur selon l'une quelconque des revendications précédentes, dans lequel le dispositif de traction comprend un organe de traction allongé courbable ou articulé (13, 13') qui est relativement élastique par rapport aux forces de traction.

5. Système tendeur selon l'une quelconque des revendications précédentes, dans lequel deux dispositifs de traction (12, 12') sont fournis qui coopèrent tous deux avec un seul et même organe tendeur (7) et qui sont censés être installés à l'opposé l'un de l'autre sur ou près de la partie supérieure (3) de l'espace ce chargement (1), dans lequel chaque dispositif de traction (12, 12') comprend un logement (14, 14') pour montage dans l'espace de cargaison (1), auquel logement dans chaque cas est fixé un organe de traction flexible associé (13', 13) et via lequel logement passe l'organe de traction flexible (13, 13') de l'autre dispositif de traction, de telle sorte que chaque organe de traction flexible (13, 13') a au moins une partie (25, 26) qui s'étend entre les deux logements (14, 14') et une partie (27) qui passe par le bas depuis un logement.

6. Système tendeur selon la revendication 5, dans lequel un organe de traction flexible (13, 13') est fixé au premier logement et passe vers le bas via l'autre logement.

7. Système tendeur selon la revendication 5, dans lequel un organe de traction flexible est fixé à un premier logement, est guidé par rapport à l'autre logement et passe vers le bas via le premier logement.

8. Système tendeur selon l'une des revendications 5 à 7, dans lequel les moyens d'arrêt (17) et les moyens de retenue (23) sont disposés sur chaque logement (14, 14'), de telle sorte que l'extrémité s'étendant vers le bas de chaque organe de traction flexible peut être amenée en coopération avec les moyens d'arrêt d'un logement.

9. Espace de cargaison (1) d'un véhicule ou conteneur et similaires, ainsi que système tendeur selon l'une quelconque des revendications précédentes permettant d'arrimer une cargaison dans ledit espace de cargaison, comprenant un organe tendeur allongé courbable ou articulé (7) qui est relativement raide dans la direction de mise en tension, tel qu'une sangle tendeuse, des moyens tendeurs (8, 9) qui coopèrent avec l'organe tendeur allongé et sont montés dans l'espace de cargaison de chaque côté du chargement (10, 11) afin d'amener l'organe tendeur (7) dans un état tendu par rapport à la cargaison contenue dans l'espace de cargaison, ainsi qu'au moins un dispositif de traction précontraint (12, 12') contenu dans l'espace de cargaison (1), lequel dispositif de traction coopère avec l'organe tendeur (7) afin, lorsque les moyens tendeurs sont libérés, d'amener l'organe tendeur de l'état tendu à une position de repos et afin de permettre à l'organe tendeur d'être amené de la position de repos à l'état tendu à l'encontre de la précontrainte du dispositif de traction, **caractérisé par** des moyens de retenue qui sont configurés pour maintenir les moyens d'arrêt dans la position de repos, en plus de la précontrainte du dispositif de traction.

10. Espace de cargaison (1) selon la revendication 9, comprenant des côtés longitudinaux droits (4, 5) qui comprennent un cadre composé de montants et de poutres longitudinales (15) raccordant les montants l'un à l'autre, ainsi que deux systèmes tendeurs, dans lequel un dispositif de traction (12, 12') de l'un des systèmes tendeurs est suspendu à l'une des poutres longitudinales (15) et un dispositif de traction (12, 12') de l'autre système tendeur est suspendu à une autre des poutres longitudinales (15).

11. Espace de cargaison (1) selon la revendication 10, dans lequel chacun des moyens tendeurs (8, 9) comporte deux extrémités, lesquelles extrémités sont ou peuvent être fixées sur ou près du sol de l'espace de cargaison.

12. Espace de cargaison (1) selon la revendication 10 ou 11, dans lequel les dispositifs de traction (12, 12') sont situés sur des côtés opposés de la partie supérieure (3) de l'espace de cargaison.

13. Espace de cargaison selon l'une des revendications 10 à 12, dans lequel les dispositifs de traction (12, 12') sont déplaçables dans la direction longitudinale de l'espace ce chargement et peuvent être fixés à des positions prédéterminées.

14. Espace de cargaison selon l'une des revendications 9 à 13, dans lequel les moyens tendeurs comprennent un mécanisme tendeur, tel qu'un cliquet.
